# EUROPEAN PATENT SPECIFICATION

(11) **EP 2 457 356 B1**
(45) Date of publication and mention of the grant of the patent: **27.01.2016**
(21) Application number: 10740790.0
(22) Date of filing: 20.07.2010
(51) Int. Cl.: H04L 29/06

(54) **METHODS AND APPARATUS FOR OPTIMIZATION OF DEVICE CAPABILITY EXCHANGE IN A NETWORK**
VERFAHREN UND VORRICHTUNG FÜR OPTIMIERTEN GERÄTEKAPAZITÄTSAUSTAUSCH IN EINEM NETZWERK
PROCÉDÉS ET APPAREIL D'OPTIMISATION D'ÉCHANGE DE CAPACITÉS DE DISPOSITIFS DANS UN RÉSEAU

(30) Priority: 21.07.2009 US 506816
(43) Date of publication of application: 30.05.2012
(73) Proprietor: Apple Inc., Cupertino, CA 95014 (US)
(72) Inventor: VAN NIEKERK, Sabine, 82008 Unterhaching (DE)
(74) Representative: Keseris, Denis
(86) International application number: PCT/US2010/042657
(87) International publication number: WO 2011/011455

(56) References cited:
- US-A1- 2008 279 119
- ROSENBERG DYNAMICSOFT H SCHULZRINNE COLUMBIA UNIVERSITY P KYZIVAT CISCO SYSTEMS J: "Indicating User Agent Capabilities in the Session Initiation Protocol (SIP); rfc3840.txt", IETF STANDARD, INTERNET ENGINEERING TASK FORCE, IETF, CH, 1 August 2004 (2004-08-01), XP015009618, ISSN: 0000-0003

## Description

### Background of the Invention

### 1. Field of Invention

The present invention relates generally to the field of device capability exchange. More particularly, in one exemplary aspect, the present invention is directed to methods and apparatus adapted to minimize delay and signaling in device capabilities exchanges.

### 2. Description of Related Technology

The Session Initiation Protocol (SIP) is one example of an application-layer control (i.e., signaling) protocol useful for creating, modifying, and terminating sessions involving one or more participants. These- sessions typically involve multimedia communications information such as for example, Internet telephone calls, multimedia distribution (e.g., video, audio and/or data), and multimedia conferencing between two or more participants.

SIP facilitates the creation and management of sessions, where a session is essentially considered an exchange of data between one or more associations of participants. SIP addresses many of the complications that arise during the creation and management of these sessions by recognizing, for example, that users may move between endpoints, may be addressable by multiple names, and may also communicate using a plethora of different methods and/or protocols. SIP works in unison with numerous other well-established protocols such as RTP/RTCP that carry various forms of real-time multimedia session data such as voice, video, or text messages, by enabling network endpoints (commonly referred to as "user agents" or "UAs") to discover one another and to agree on the parameters of a session they would like to share. SIP also enables the creation of an infrastructure of network hosts (commonly referred to as "proxy servers") to which user agents can send registrations, invitations to sessions, and other requests for locating prospective session participants and for numerous other functions. SIP also works independently of any underlying transport protocols utilized, and without any sort of dependency on the type of session that is being established.

To accomplish these tasks, SIP supports the establishment and termination of multimedia communications through the use of: (1) user location, which includes the determination of the end system to be used for communication; (2) user availability, which includes the determination of the willingness or ability of the called party to engage in communications; (3) user capabilities, which includes the determination of the media and media parameters to be used; (4) session setup or "ringing", which includes the establishment of session parameters at both called and calling entity; and (5) session management, including transfer and termination of sessions, modifying session parameters, addition or removal of parties, and invocation of particular services.

With regards to the determination of user capabilities, the SIP method OPTIONS allows a UA to query another UA or a proxy server with regards to its capabilities. This allows, for example, a client to discover information about the supported methods, content types, extensions, codecs, etc. of anther device. The target of the OPTIONS request is identified by the Request-URI, which identifies another UA or a SIP server. A SIP OPTIONS request is sent as part of an established dialog to query the peer on capabilities that may be utilised later in the dialog, but can also be sent outside the established dialog. The SIP OPTIONS request often contains an *Accept* header field to indicate the type of the message body of the user agent client ("UAC"), which shall be received in the response. Typically, this is set to a format that is used to describe the media capabilities of the UA, such as Session Description Protocol ("SDP") (e.g. *"application*/*sdp"*).

As a positive response to a received SIP OPTIONS request, a SIP 200 OK response is generated and sent back to the sender of the SIP OPTIONS request. This SIP 200 OK response message may contain a message body containing the media capabilities of the UA, preferably in the same format as indicated in the SIP OPTIONS request (e.g., application/sdp).

The SIP OPTIONS procedure for exchanging capabilities between devices requires the use of a separate SIP OPTIONS request message as well as a separate 200 OK response message for each device. While the existing SIP OPTIONS procedure historically has been generally suitable for a small number of devices, the convergence and number of different devices now associated with a single user or user home network has grown over time to encompass a large number of devices (for example, a typical home network now can include a user's mobile phone, a notebook computer, a desktop computer, a television set top box, gaming device, etc.), many of which are now capable of establishing sessions and communicating with one another. Accordingly, the existing SIP OPTIONS procedure can now typically result in a large amount of signaling on the network which can burden network bandwidth, resulting in larger delays in the exchange of capabilities between devices, poor user experience, and other deleterious effects.

For example, if the capabilities of five (5) devices of one user need to be exchanged with the device of another user, then five (5) separate SIP OPTIONS request messages and five (5) separate 200 OK response messages need to be exchanged on the interface between the external network and the gateway in the user's home network (ten (10) messages total), as well as on the interface between the gateway in the user's home network and the devices on the user's home network (another ten (10) messages, for a total of twenty (20) messages for the entire transaction). The problem may be further exacerbated if there are other intervening networking devices such as a MoCA interface or router.

In one exemplary approach, U.S. Patent Application Publication No 20080279119 to Stille et al. presents a system and method for handling multimedia conference calls in a telecommunication network. To determine the capabilities of the other terminals in a group, a first terminal sends a query message to a group server. The group server sends further query messages to the other terminals and collects their responses containing their capabilities. The group server analyzes the capabilities to determine a common set of capabilities. The group server then sends the common set of capabilities in a response to the first terminal. The pre-characterising portions of the appended claims are based on this document.

In another exemplary approach, *"*Indicating User Agent Capabilities in the Session Initiation Protocol (SIP); rfc3840.txt" to Internet Engineering Task Force (IETF) CH. 1, August 2004 presents mechanisms by which a Session Initiation Protocol (SIP) user agent can convey its capabilities and characteristics to other user agents and to the registrar for its domain. This information is conveyed as parameters of the Contact header field.

Moreover, certain SIP operations and or network topologies may multiply messaging traffic during normal operation. For example, when a first device queries the capabilities of a second device (e.g. sending an OPTIONS message to SIP:exampleuser@somewhere.com), a proxy entity may "fork" the request to the other devices associated with the second device (e.g., currently registered slave devices, etc.). In this scenario, a single request can generate multiple "forked" or duplicate requests, one for each of the other devices. Each one of these "forked" requests will have a corresponding response from the recipient device to the originator of the request. In fact, a requesting sender of an OPTIONS message should always be prepared to receive several responses.

Based on the foregoing, improved methods and apparatus are needed for reducing the amount of signaling that takes place on a network when devices exchange capabilities using a session-based protocol such as SIP. Ideally, this will be accomplished at least in part via the obviation of redundancies associated with existing signaling procedures, thereby resulting in less signaling and less delay whin devices exchange capabilities.

Such improved methods and apparatus would ideally be automated as much as is practical in order to further enhance user experience, as users don't necessarily need to be aware that capabilities are being exchanged.

Lastly, the improved methods and apparatus should leverage existing hardware and software as much as possible so as to facilitate their implementation and backwards compatibility in networks that utilize extant session-based protocols such as SIP.

### Summary of the Invention

The present invention satisfies the foregoing needs by providing, *inter alia,* methods and apparatus for streamlined communications exchanges within a session-based protocol.

In a first aspect of the invention, a method for enabling a first user equipment (UE) device to participate in a capability exchange between a group of other UE devices in a network is disclosed. In one embodiment, the method includes: generating a UE capabilities request message; transmitting the UE capabilities request message to an intermediary entity; and receiving in response to the UE capabilities request message a UE capability response message, the UE capability response message comprising the capabilities of one of the group of other UE devices in communication with the intermediary entity.

In one variant, the intermediary entity includes a premises network gateway or router.

In another variant, the act of generating the UE capabilities request message further includes adding an information element to an options request message, thereby generating the UE capabilities request message for the group of other UE devices.

In yet another variant, the network is a wireless network having an IP multimedia subsystem (IMS), and the request message includes a session initiation protocol (SIP) based message format.

In a second aspect of the invention, a method for capabilities exchange between a plurality of user equipment (UE) devices on one or more networks is disclosed. In one embodiment, the method includes: receiving a message requesting capabilities data for a plurality of other UE devices from a first UE device; determining whether the request message contains a designated information element; in response to the information element, providing the capabilities data; and transmitting a response message to the first UE device containing the capabilities data.

In one variant, the act of providing includes: collecting the capabilities data relating to the plurality of other UE devices; and generating the response message based at least in part on the act of collecting. The collection is performed e.g., independently from the act of determining that the request message contains the designated information element, and/or in response to the detection of a newly discoverable UE device on one of the one or more networks. The collection may also be performed according to a periodic or other (e.g., event-driven) schedule.

In another variant, the method includes providing pre-stored data relating to the capabilities of the plurality of UE devices, and/or providing data relating to the capabilities of the plurality of UE devices, the plurality comprising only a subset of the UE devices present on the one or more networks.

In a third aspect of the invention, user apparatus is disclosed. In one embodiment, the apparatus includes: a processing device in data communication with a memory; a network interface subsystem in communication with a wireless network and the processing device; and a plurality of executable instructions resident within the memory. When executed by the processing device, the instructions: generate a capabilities request message, the capabilities request message comprising a request for the capabilities of a group of user devices located on the wireless network; transmit the capabilities request message to an intermediary entity via the network interface subsystem; and receive in response to the transmission of the capabilities request message a singular capability response message, the capability response message comprising the capabilities of the group of user devices.

In one variant, the group of user devices includes all user devices associated with a single user in a premises network, or alternatively all user devices associated with a single premises network irrespective of user.

In another variant, the request message includes an information element indicating to the intermediary entity that it should transmit the response message without forwarding the request message to any of the user devices of the group.

In yet another variant, the apparatus includes a wireless mobile device, and the network interface subsystem includes a 3GPP-compliant cellular interface. The network interface subsystem includes an IP multimedia subsystem (IMS), and at least one of the messages is transmitted according to a session-based protocol (e.g., SIP).

In a fourth aspect of the invention, intermediate entity apparatus is disclosed. In one embodiment, the apparatus includes: a processing device in data communication with a memory; a network interface subsystem in communications with a wireless network and the processing device; and a plurality of executable instructions resident within the memory. When executed by the processing device, the instructions: determine whether a capabilities request message received via the network interface subsystem includes a request for the capabilities of a group of UE devices located on a network associated with the intermediate entity apparatus; assemble data relating to the capabilities associated with the group of UE devices located on the network associated with the intermediate entity apparatus; and transmit a singular capability response message, the capability response message comprising the assembled capabilities data of the group of UE devices.

In one variant, the one or more executable instructions that assemble the capabilities associated with the group of UE devices are executed performed in response to determining that the received capabilities request message contains a designated information element having a prescribed format and content

In another variant, the one or more executable instructions that collect the capabilities associated with the group of UE devices are executed independently from the determination whether the received capabilities request message includes the request for the capabilities of the group of UE devices. The instructions may further comprise instructions that when executed by the processing device detect a newly discoverable UE device on the wireless network. In response to the detection of the newly discoverable UE device on the wireless network, the intermediate entity executes the one or more executable instructions that collect the capabilities associated with the group of UE devices located on the network associated with the intermediate entity apparatus.

In yet another variant, the one or more executable instructions that collect the capabilities associated with the group of UE devices is executed periodically according to a timing criterion.

In a fifth aspect of the invention, a method of operating a network having a session-based protocol is disclosed. In one embodiment, the method includes: receiving a request message transmitted from a first entity at a second intermediary entity, the request message comprising a modification of a request message associated with the protocol; evaluating said request message and, based at least in part on the modification, gathering data relating to a plurality of devices of the network; and transmitting the gathered data back to the first entity using a modification of a response message associated with the protocol.

In one variant, the protocol includes the Session Initiation Protocol (SIP), and the request message includes a SIP capabilities request message, and the second intermediary entity includes a gateway or router, and the network includes a premises LAN. The modification of a request message includes the addition or appending of an information element identifying the ones of the plurality of devices for which the capabilities data is being requested.

In a sixth aspect of the invention, computer readable apparatus is disclosed. In one embodiment, the apparatus includes a computer-readable medium adapted to store one or more computer programs which, when executed, implement an extended session-based protocol.

In a seventh aspect of the invention, an extended or enhanced session-based protocol is disclosed. In one embodiment, the extended protocol is based on an existing and substantially ubiquitous protocol (e.g., SIP), and extends the capability of the base protocol by, *inter alia,* adding information elements (IEs) to certain messages so as to enable enhanced request/response functionality.

Other features and advantages of the present invention will immediately be recognized by persons of ordinary skill in the art with reference to the attached drawings and detailed description of exemplary embodiments as given below.

### Brief Description of the Drawings

FIG. 1 is a block diagram illustrating an exemplary embodiment of generalized system architecture for use in implementing the methodologies of the present invention.
FIG. 2 is a block diagram illustrating one embodiment of IP Multimedia core network Subsystem (IMS) architecture for use in implementing the methodologies of the present invention.
FIG. 2A is a functional block diagram illustrating one embodiment of a premises gateway/router device enabled with the enhanced session-based protocol of the present invention.
FIG. 3 is a process flow diagram illustrating one embodiment of a method for requesting the capabilities of a plurality of UEs in a network in accordance with the invention.
FIG. 4 is a logical flow diagram illustrating one embodiment of a method for processing received capabilities request messages in accordance with the invention.
FIG. 5 is a process flow diagram illustrating one embodiment of a method for collecting the capabilities for one or more user equipment (UE) devices in accordance with the invention.
FIG. 6 is a ladder diagram illustrating a first embodiment of exemplary messaging flow for obtaining the capabilities of a plurality of UE devices simultaneously in accordance with the invention.
FIG. 7 is a graphical illustration showing one embodiment of a UE capabilities request message in accordance with the invention.
FIG. 8 is a graphical illustration showing one embodiment of a UE capabilities response message in accordance with the invention.
FIG. 9 is a ladder diagram illustrating a second embodiment of exemplary messaging flow utilizing SIP for obtaining the capabilities of a plurality of UE devices simultaneously in accordance with the invention.
FIG. 10 is a graphical illustration showing an exemplary SIP OPTIONS request message in accordance with one embodiment of the invention.
FIG. 11 is a graphical illustration showing an exemplary SIP OPTIONS response message in accordance with one embodiment of the invention.

### Detailed Description of the Invention

Reference is now made to the drawings, wherein like numerals refer to like parts throughout.

### Overview

The present invention discloses, *inter alia,* methods and apparatus that optimize the exchange of capabilities request messages across a network. In an exemplary embodiment, a network architecture is disclosed which leverages the SIP protocol to optimize the exchange of capabilities of various user equipment (UE) client devices present on a network. In one variant, this architecture includes a "3G" IMS (IP Multimedia Subsystem) that leverages intermediate entities, such as a premises network gateway, to collect the capabilities, of all UE devices on a given premises network, and forward this collected capability information on to a requesting UE device.

The present invention accomplishes the foregoing functions in one embodiment by generating a capabilities request message and appending this message with an information element (IE) that requests the capabilities of all UE devices on a given network (such as a user's home network). The receiving device or intermediate entity then responds to the request message with a capabilities response message that includes the capabilities of all UE devices on the requested network. In an exemplary embodiment, the receiving device (e.g., premises gateway) collects the capabilities of UEs present on the network in response to receiving the capabilities request message from a UE device. In an alternative embodiment, the collection of capabilities occurs separate and apart from the receipt of any capabilities request messages. In this manner, the intermediate entity acts as a repository of capabilities information for a given home network.

In other embodiments, other types of IEs are used to elicit a desired response from the UE or intermediate gateway. In one such variant, the IE may be limited to certain capabilities or devices (e.g., UE Caps: Audio-only, Audio-Visual, etc.). Similarly, in another variant, the IE may only elicit responses from certain types of devices (e.g., UE Caps: phone, media player, PC, etc.). Moreover, in alternate embodiments, the message carrying the IE may use the IE as a portion of its operation. For example, in one variant, the message may cause or respond to a session configuration, such as a SIP INVITE type message. Thus, a SIP INVITE carrying an IE for "UE Caps: Audio-only" would only initiate a session with Audio-only devices. Similarly, in an alternate variant, the message may cause or receive an "out-of-band" or "out-of-call" type communication, such as a SIP MESSAGE type message. A SIP MESSAGE carrying an IE for "UE Caps: PC" would only be forwarded to PC type devices.

The improved methods and apparatus disclosed herein have several advantages over prior art solutions, including reducing the amount of signaling that occurs on the network interface between the external network and intermediate entity in a premises (e.g., home) network, as well as the amount of signaling that takes place on the network interface between the intermediate entity of the network and devices in the that network. With regards to the latter case, signaling is advantageously reduced in that the devices in the user home network theoretically only need to relay capabilities to the intermediate entity once, since the intermediate entity acts as a repository for the capabilities of all UEs on the home network. Furthermore, user experience is enhanced through implementation of the invention, as delays associated with the exchange of capabilities of multiple devices are minimized. Additional communications bandwidth (which may or may not be related to the aforementioned delay) is also freed up. Moreover, power consumption is also reduced in the intermediate entity (e.g. the home gateway) as well as in the participating UE devices, as less signaling messages for UE capability exchange has to be handled by the intermediate entity and the participating UE devices. This is particularly advantageous for those devices which operate with portable power supplies such as batteries or solar cells.

### Detailed Description of Exemplary Embodiments

Exemplary embodiments of the present invention are now described in detail. While these embodiments are discussed primarily in the context of an IP Multimedia core network Subsystem (IMS) utilizing the Session Initiation Protocol (SIP), it will be recognized by those of ordinary skill that the present invention is not so limited. In fact, the various aspects of the invention are useful in any device or network that utilizes a signaling protocol which permits the exchange of capability information between devices as is disclosed herein. For example, the ITU-T has formalized the H.245 and H.323 protocols, both of which utilize signaling protocols which are similar to SIP. Accordingly, H.245 and H.323 may greatly benefit from one or more disclosed aspects of the invention.

Moreover, while the following exemplary embodiments of the invention are described in the context of a wireless network (e.g., 3GPP/UMTS, WLAN, WiMAX, etc.), it will be appreciated that the invention is not so limited, and may in fact be practiced over wired, wireless, or even optical (e.g., FTTH, FTTC, FiOS, DWDM, etc.) transports. Literally any bearer capable of carrying the session-based protocol messages described herein may be used in conjunction with the invention as desired.

### Apparatus -

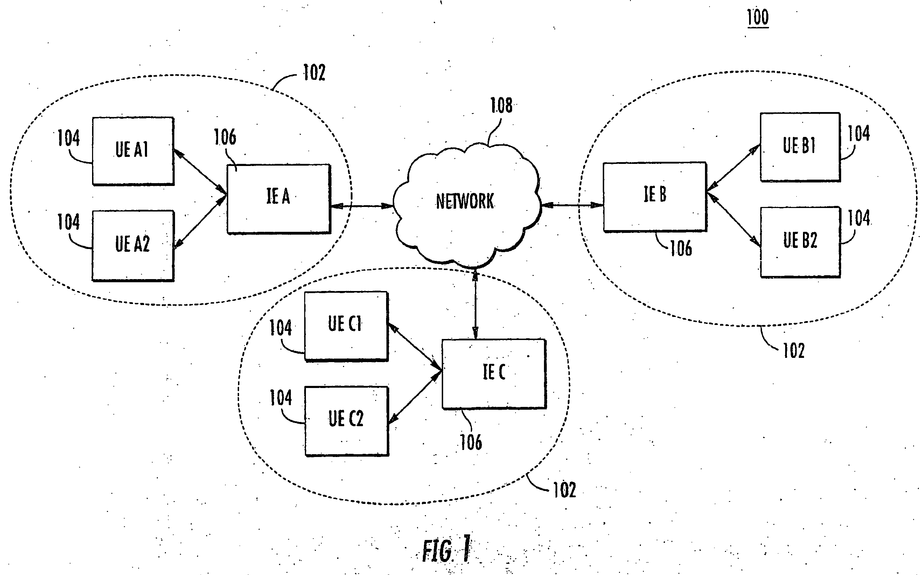

Referring now to FIG. 1, one embodiment of a generalized system architecture 100 for implementing the methodologies of the present invention is illustrated. The system architecture includes two or more premises (e.g., home or enterprise) networks 102 coupled together via an external network 108. Each premises network 102 consists of one or more user equipment client devices (UE) 104 as well as an intermediary entity device (IED) 106. The UE 104 can include any number of devices including, without limitation, personal computers (PCs), such as for example an *iMac*™*, Mac Pro*™, *Mac Mini*™ or *MacBook*™, and minicomputers, whether desktop, laptop, or otherwise, as well as mobile devices such as handheld computers, smartphones (such as for example an *iPhone*™), PDAs, video cameras, set-top boxes, personal media devices (PMDs), such as for example an *iPod*™ touch, or any combinations of the foregoing. It will be appreciated that while the system 100 of FIG. 1 illustrates multiple premises networks 102 in communication with one another, the invention may be practiced between any types of networks that utilize sessions including for example a premises network device in communication with a server, etc. Myriad different network configurations useful with the present invention will be recognized by those of ordinary skill provided the present disclosure.

The intermediate entities 106 of FIG. 1 generally act as a node or interface between a premises network 102 and an external network 108. In an exemplary embodiment, the intermediate entity device includes a network gateway/router that acts as a protocol converter between devices. A gateway functions to, *inter alia,* accept a packet formatted for one protocol (e.g., Ethernet (IEEE Std. 802.3) or *AppleTalk*™) and convert that packet to a format for another protocol (e.g. TCP/IP) before forwarding it on. A gateway can be implemented in hardware and/or software; however, many typical applications implement gateway functionality in software installed within another device such as a network router or a personal computer. In addition to a network gateway as described above, the intermediate entity device functionality, as described subsequently herein, could also be readily incorporated into a 3G (e.g., UMTS) femtocell, Home Node B, Home eNodeB, premises base station, repeater, or any other device capable of operating with the functionality of a gateway as described herein. In addition, it is recognized with the convergence of technologies that many UE devices, as described previously above, could further act as intermediate entities and implement the methodologies described herein (i.e., thereby obviating a separate IED 106 of the type shown in FIG. 1).

Furthermore, while primarily discussed subsequently herein as a device geographically local to a user's premises network, intermediate entities according to the invention could readily be implemented remote from the user's network. For example, it is envisioned that intermediate entities as described herein could readily serve as a repository for a multitude of different users associated with the same or different premises. Accordingly, the intermediate entity device 106 could operate in a client-server relationship with UE for any number of users, and/or operate at a geographically remote location (such as at the headquarters of a service provider, a cable or fiber distribution network hub site, a telephony switching node, etc.).

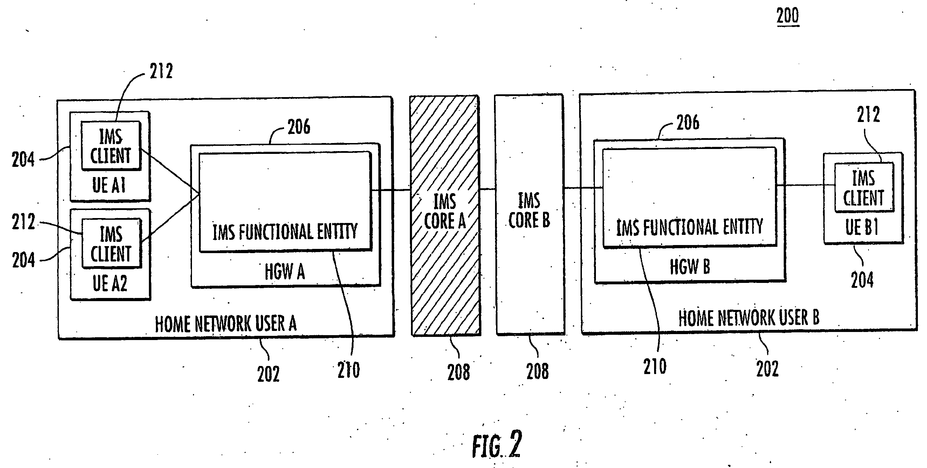

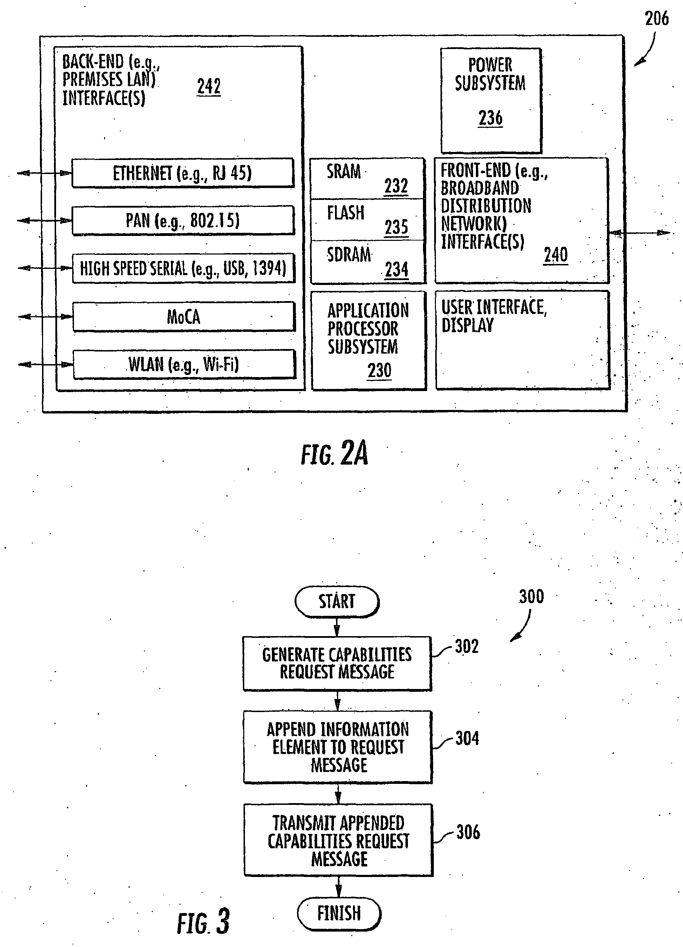

FIG. 2 illustrates a specific implementation of the network architecture illustrated in FIG. 1. The network architecture 200 of FIG. 2 is illustrated in the context of the aforementioned UMTS/3G IMS, although other contexts may be applied. Similar to the architecture shown in FIG. 1, the architecture 200 of FIG. 2 includes a premises (home) network 202 having one or more UEs 204, each including an IMS client 212 as well as a premises gateway 206 that includes an IMS functional entity 210. The two premises networks 202 illustrated in FIG. 2 are coupled via one or more IMS core entities 208.

FIG. 2A illustrates one embodiment of a premises gateway device 206 adapted to implement the protocol functionality of the present invention. The device 206 includes a digital applications processor 230 (e.g., DSP, FPGA, ASIC, microcontroller, RISC or CISC processor, etc.), program memory 232, data memory 234 and ROM 235 in communications therewith, power supply 236, and upstream and downstream network interfaces 240, 242 for communication with the external network and premises network, respectively. The upstream interface(s) 240 may include for example a DOCSIS modem, cellular wireless interface, WAN interface, DSL line, ISDN or T1 line, fiber-optic interface, satellite transceiver, or any other type of broadband connection. The downstream interface(s) 242 may include for example a WLAN (e.g., Wi-Fi) interface, USB or IEEE-Std. 1394 "FireWire" interface, Ethernet (IEEE Std. 802.3) with RJ 45 connector, MoCA interface, PAN (e.g., Bluetooth or 802.15) interface, etc. In that session based protocols such as SIP are effectively transport independent, literally any types of upstream and downstream interfaces can be utilized consistent with the invention.

The processor 230 is adapted to run one or more computer programs which implement the session-based protocol (e.g., SIP) as described in greater detail below.

In certain embodiments, the gateway also optionally includes a communications protocol which permits communication via the upstream interface with a network entity (e.g., server) so as to facilitate: (i) remote control of the gateway by the server, such as to adjust storage, capabilities update frequency, etc., (ii) transmission of capabilities data associated with the various UE's on the premises network to the server for remote analysis/storage; and (iii) reprogramming of the gateway (e.g., updates to the session-based protocol stack to facilitate reading new information elements or IEs, such as via download of one or more files, or "reflashing" the ROM of the device.

### Methods -

Referring now to FIG. 3, one exemplary methodology 300 for requesting the capabilities of a plurality of UEs in a network according to the invention is illustrated. In one embodiment, the request originates from a user of a first UE device, and includes a request of the capabilities of all the UEs in a home network of another user.

At step 302, the originating UE generates a "capabilities request" message in accordance with a predetermined protocol. It will be recognized that this message may be a dedicated message for this purpose, or alternatively may have other functions in addition to those described herein. In the exemplary implementation, the predetermined protocol is SIP, and the capabilities request, message generated is a SIP UE capabilities exchange request message SIP OPTIONS. As used herein, the term "SIP" refers to, without limitation, those protocols and features described in RFC 2543 dated March 1999 entitled "SIP: Session Initiation Protocol", and/or RFC 3261 dated June 2002 of the same title, each of which is incorporated herein by reference in its entirety. Moreover, while exemplary embodiments of the invention are described in the context of SIP, it will be appreciated that the invention is in no way so limited, and may in fact be readily adapted to other session-based protocols and environments.

At step 304, the originating UE appends an information element (IE) to the generated capabilities request message. In the context of the aforementioned SIP OPTIONS request message, the appended IE indicates that the requesting UE requests the capabilities of a plurality of UEs. In one embodiment, the plurality of UEs includes all UEs of a specified user, and the appended information element is specified as "*UE***-***Caps: All"* (indicating capabilities for all UEs). In one exemplary embodiment, the message is addressed to the specified user (e.g., SIP:exampleuser@somewhere.com). In an alternate embodiment, the message is addressed to a third party device (such as a gateway, or home network controller), rather than the specific user. In such cases, the third party device retains a database populated with relevant UE capability information for one or more UEs.

In one alternative embodiment, the plurality of UEs includes all UEs of a specified serving device (e.g., base station, gateway, access point, etc.). For example, if the requesting device is aware of a home network, the requesting device may query the premises gateway by using "UE-Caps:All" to reference all UEs in the home network, thereby further minimizing message exchanges. In yet another alternative embodiment, the requesting device may explicitly use an IE which requests the capabilities of all UEs present within a premises or home network (e.g., "UE-Caps: Networked Devices").

Moreover, in various embodiments, the capabilities message or information element may have further limitations. For example, in one embodiment, a selection criteria is included to focus the responses to an appropriate group of interest (e.g., "UE-Caps: All with Capabilities. Video.Codecs = 'MPEG2', etc.). In another embodiment, the response may be limited to a maximum number of reporting UEs, such as may be useful for very large networks (e.g., UE-Caps: MaxResponse =10 etc.).

In certain embodiments, routing information may be gleaned from a previously sent transmission header. In SIP, the message header comprises the routing information fields "Via", "To", etc. Thus, the "Via" field in a SIP header contains the address of the gateway for the home network (e.g., IP address of the gateway). Similarly, the "To" field in a SIP header contains the address of the user device. In other embodiments, the IE encapsulated within the request itself may directly provide an address parameter. For example, an IE comprising "UE Caps: All@193.12.31.56" would directly address the capabilities of all devices connected to a target device (e.g., a target gateway) having an IP address of 193.12.31.56.

In yet another alternative, the originating UEs appended information element comprises a request for all capabilities of UEs according to a specified criterion or logical/physical grouping. In this manner, the originating UE can request capabilities for a given subset or class of devices (e.g., all handheld devices, all printers, all desktop computers, all digital cameras, and so forth). In one arbitrary example the Information element description may include a device type (e.g., "UE-Caps:All with Capabilities.DeviceType = "pointer"). In one exemplary embodiment, standardized device-type descriptions (similar to MIME-types for data), may be used.

Using one or more of the foregoing techniques, the originating UE can request the capabilities of multiple UE devices simultaneously according to any number of desired criteria/parameters.

At step 306 of the method 300, the generated capabilities request message with the appended information element (IE) is transmitted across a network towards a gateway device. In an exemplary embodiment, the gateway device acts as a repository of capabilities information for all UE devices in a given network or set of networks.

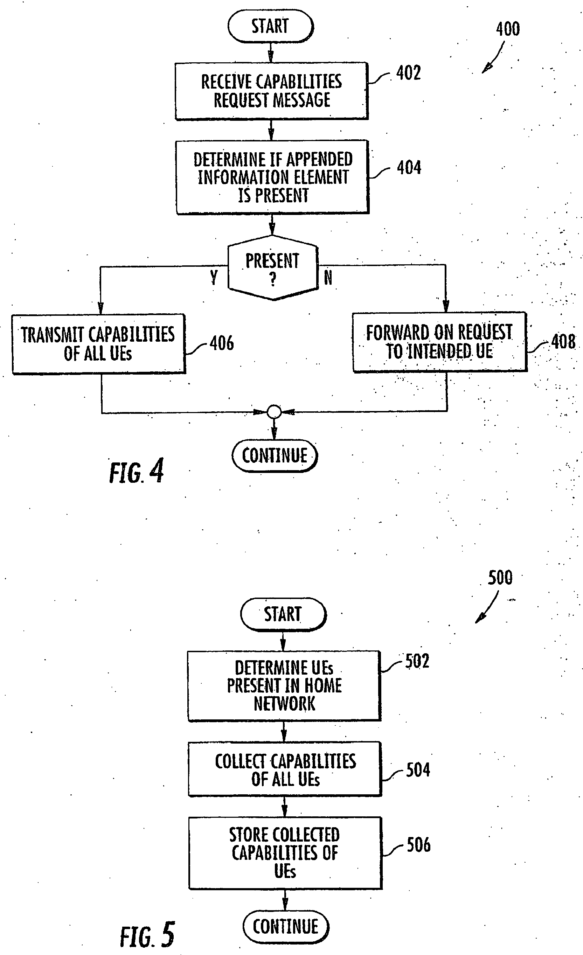

Referring now to FIG. 4, one embodiment of the methodology for processing received capabilities request messages 400 according to the invention is disclosed. In an exemplary implementation, the method for processing received capabilities request messages is executed at a home gateway device, although it will be appreciated that other applications and processing entities (including even those which are remote from the gateway or act as a proxy therefore) may be used.

At step 402, a device (such as a home gateway) receives a capabilities request message at a network interface.

At step 404, the receiving device determines whether or not an appended information element is present on the received capabilities request message.

If the appended information element is determined to be present at step 404, then the receiving device will respond by transmitting the capabilities associated with all requested UEs at step 406. In an exemplary embodiment utilizing SIP, this is accomplished by generating a UE capabilities exchange response message 200 OK and adding the capabilities of all requested UEs to the message prior to transmittal. In addition, it is desirable to uniquely identify each UE included by utilizing a unique identifier (e.g. the Globally Routable UA Universal Resource Identifier (URI) or GRUU).

Otherwise, the receiving device will forward on the capabilities request message towards the intended UE(s) at step 408 in a conventional manner.

Referring now to FIG. 5, one embodiment of the methodology 500 for collecting capabilities of UEs in a premises network according to the invention is illustrated. In an exemplary implementation, the method of FIG. 5 is executed in response to determining that an appended information element is present in a received capabilities request message (see e.g., FIG. 4, step 404). In an alternative embodiment, the method 500 illustrated in FIG. 5 can be periodically executed according to any number of predetermined criteria. For example, the method might be executed on an hourly, daily or weekly, etc. basis.

As yet another alternative, the method 500 is executed in response to the detection of an event, such as the detection of a newly present UE within a specified network. This detection may be passive; i.e. the device executing the methodology of FIG. 5 could listen for signals that indicate the presence of a previously unknown UE. For example, if the executing device comprises a network gateway and router that connects a home network to the Internet, the executing device could execute the methodology of FIG. 5 upon receiving a request by a newly detected UE to gain access to the network/Internet. Ideally, such an implementation will take advantage of existing signaling protocols to facilitate the collection of capabilities by the executing device.

Regardless of the trigger for executing the methodology of FIG. 5, the methodology for collecting capabilities of UEs in a network comprises three (3) main processing steps.

first, at step 502, the executing device determines what UEs are present within the home network. This is accomplished via any number of known discovery procedures. For example, in the context of the Bluetooth specification, two Bluetooth devices (device A and device B) initiate a device discovery process by first establishing a physical connection via a link establishment procedure. This physical connection includes a wireless link (PHY) between the radio transceivers of the two devices. Upon establishing a physical link, the two devices then perform a channel establishment procedure to establish a logical connection between the devices:

Alternatively, the UEs can be discovered via any number of other well known discovery procedures including Wi-Fi (IEEE Std. 802.11) device discovery processes, plug-and-play or universal plug and play (UPnP) connections, and the like.

Next, at step 504, the capabilities of the discovered UEs are collected. In one exemplary embodiment, the devices discovered at step 502 will initiate a service discovery session corresponding to the protocol utilized during the device discovery process. The service discovery session will then determine the capabilities of the discovered UE. In one variant, this is accomplished using the SIP protocol. In an alternative embodiment, one or more protocols other than the protocol utilized for device discovery can be employed to discover UE capabilities; see e.g., co-owned and co-pending U.S. Patent Application Serial No. 12/214,969 filed June 23, 2008 and entitled "Apparatus and Methods for Providing Service Discovery Over Alternate Transports", the contents of which are incorporated herein by reference in their entirety. In yet another alternative embodiment, the executing device (e.g., the home gateway) will utilize service discovery protocol software such as the exemplary *Bonjour*™ software manufactured by the Assignee hereof. The *Bonjour* protocol is intended for use on, *inter alia,* local area networks (LANs) to locate devices such as printers, as well as other computers and file sharing servers, and the services that those devices offer. It is also used by music services (e.g., Apple *iTunes*^{®}) to find shared music, and to find shared photos, or even other users on the local network, as well as to find digital video recorders and shared media libraries.

At step 506, the capabilities collected at step 504 are stored at the executing device for later retrieval. In an exemplary embodiment, these stored capabilities could be stored in a universal repository (such as a *Bonjour* record) that could be readily accessed by any device familiar with the relevant protocol used. These and other methods for storing the collected capabilities of UEs on the network would be readily apparent to one of ordinary skill given the present disclosure, and accordingly are not described further herein.

The following examples further illustrate the operation of the foregoing methods. It will be understood that these examples are in no way limiting, and purely for purposes of more clearly demonstrating various aspects of the present invention(s).

### Example #1

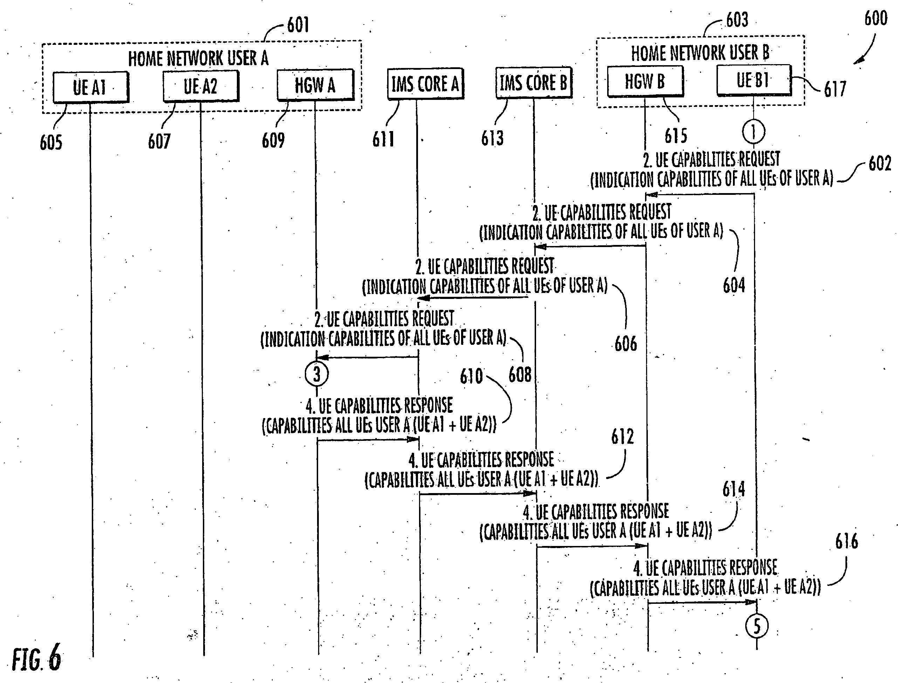

Referring now to FIG. 6, a ladder diagram illustrating the message flow 600 for the exchange of capabilities of multiple UEs of a user in accordance with one embodiment of the present invention is shown and described in detail. In the example illustrated in FIG. 6, the system includes a first premises (e.g., home) network 601 for a first user A and a second home network 603 for a second user B. The user home network A 601, in the illustrated example, includes two UEs (UE A1 605 and UE A2 607), which are connected through a home gateway (HGW A 609) to the IMS network (IMS core A 611). The second home network 603 for user B includes one UE (i.e., UE B1 617), which is connected through a home gateway (HGW B 615) to the IMS network (IMS core B 613). Both IMS networks (IMS core A and IMS core B) are in data communication with each other. Furthermore, each of the UEs includes an IMS client, while the gateways each include IMS functional entities.

In one embodiment, IMS functional entities provide SIP based back-to-back service, e.g., simultaneously operating as a client to the core network, and a server to the home network side. Alternatively, in another embodiment, IMS functional entities may operate as a typical server for functions like registration, etc., while transparently passing INVITE messages to devices or users correctly identified in the INVITE message.

Unlike IMS functional entities, IMS clients are defined by 3GPP, and heavily standardized. However, it should be appreciated that such limitations of 3GPP are not required to the practice the invention. Thus, in alternate networks and embodiments, the gateway could collect capabilities of non-IMS clients to permit mixed operation. In one such exemplary variant, the gateway uses a transcoder to communicate with the non-IMS device (such that the requesting entity can setup IMS sessions with the non-IMS entity via the bridge). In yet other alternate variants, the requesting entity may not be limited to IMS but uses IMS when available (e.g., in IMS-based networks) to query for capabilities.

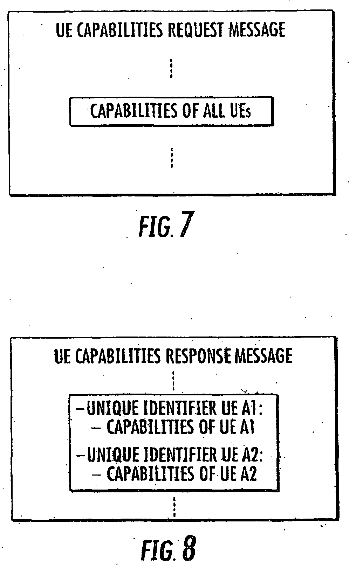

Accordingly, when UE B1 617 of user B wants to know the capabilities of all UEs of user A, UE B1 generates a UE capabilities request message, and adds a new information field in this UE capabilities request message (which indicates that UE B1 requests for the capabilities of all the UEs of user A). One implementation of this message format is illustrated at FIG. 7. This UE capabilities request message with the information field indicating a request for all the capabilities of user A is then transmitted to the home gateway B 615 at step 602.

At step 604, the UE capabilities request message is forwarded onto the IMS core 613 for user B, which subsequently forwards the message onto IMS core 611 for user A at step 606. At step 608, the IMS core for user A forwards the message onto the home gateway 609 for user A.

When home gateway A receives the UE capability request message that originated from the UE B1 home, gateway A checks if the UE capabilities request message contains the information field indicating that the capabilities of all UEs of the user are requested. After home gateway A determines that the UE capabilities request message contains an information element requesting for all UE capabilities for user A, home gateway A collects the capabilities for all the UEs of user A (i.e., UE A1 605 and UE A2 607) if not already collected. Then, home gateway A generates a UE capabilities response message, and adds the capabilities of UE A1 and UE A2 of user A into this message. In addition, the UE capabilities response message includes a unique identifier for each UE, thereby enabling user B to identify which capabilities belong to which UE. One exemplary format for the UE capabilities response message is illustrated at FIG. 8.

At step 610, home gateway A sends this UE capabilities response message via IMS core A to IMS core B (step 612) onto home gateway B (step 614), and finally onto UE B1 at step 616. Upon reception of the UE capabilities response message that includes the capabilities of all the UEs of user A (i.e., the capabilities of UE A1 and UE A2), UE B1 will store all these UE capabilities in memory. In addition, or as an alternative, home gateway B will store all of these UE capabilities for user A in its storage or will otherwise utilize these UE capabilities upon receipt of these capabilities for other purposes.

### Example #2

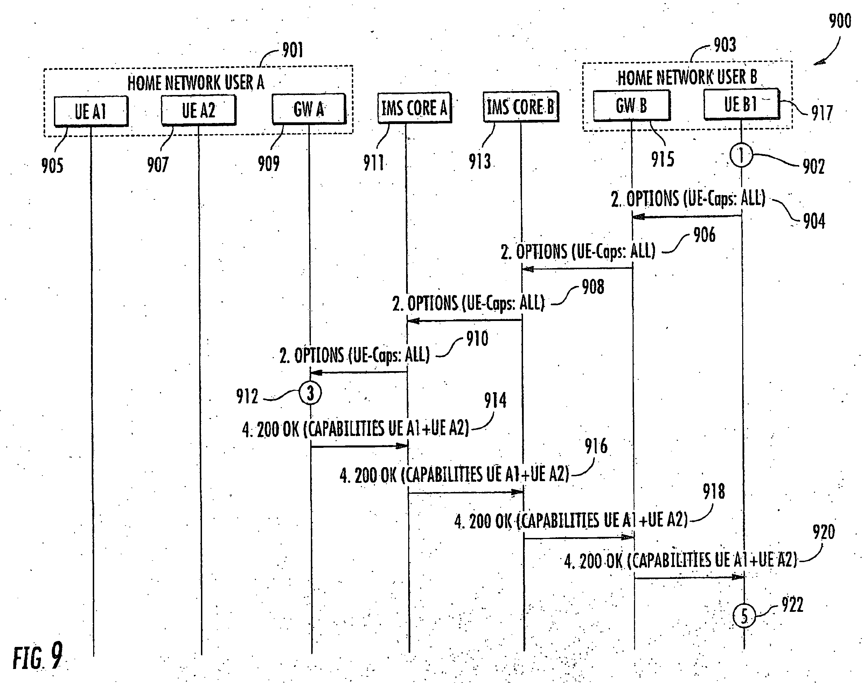

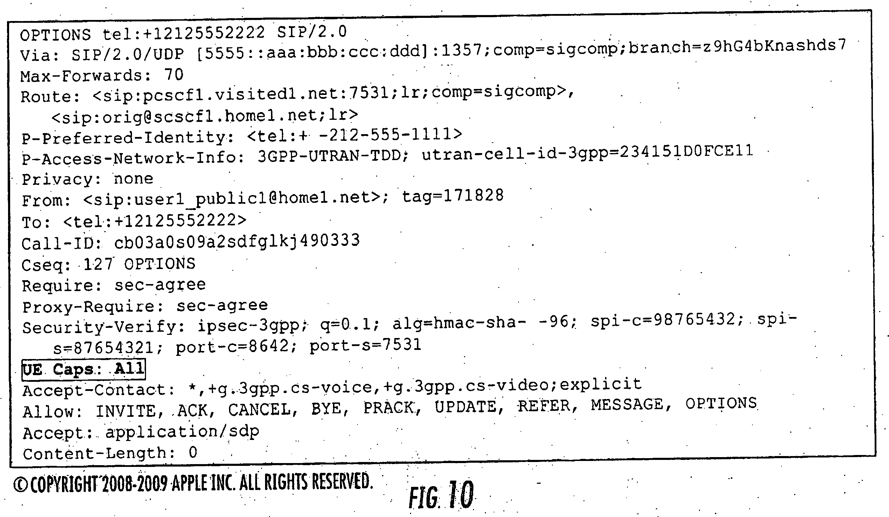

Referring now to FIG. 9, a ladder diagram illustrating the message flow 900 for the exchange of capabilities of multiple UEs of a user utilizing SIP messaging according to another embodiment of the invention is shown and described in detail. In the illustrated implementation, User B associated with UE B1 917 wants to know the capabilities of all UEs of user A (i.e., UE A1 905 and UE A2 907). At step 902, UE B1 generates a UE capabilities request message SIP OPTIONS and adds the new information element "*UE-Caps"* in this SIP OPTIONS message, and sets it to the value *"All"* in order to indicate that the UE B1 917 requests for the capabilities of all UEs of user A in the home network 901 of user A. One embodiment of the formatting of the SIP OPTIONS request message containing this new information element *"UE-Caps"* with the value *"All"* is illustrated in FIG. 10.

Starting at step 904, UE B1 917 transmits this UE capability request message via home gateway B 915 to IMS core B 913 (step 906); the message is subsequently forwarded onto IMS core A 911 (step 908) and onto home gateway A 909 of user A (step 910). When home gateway A 909 receives the UE capability request message SIP OPTIONS from UE B1, home gateway A checks if this SIP OPTIONS message contains the information element (e.g., *"UE-Caps"* with the value set to *"All"*), indicating that the capabilities of all UEs are requested. Upon determining that the information element *"UE-Caps"* does have the value set to "*All*", home gateway A assembles all the capabilities from all UEs of user A (which may also be pre-stored in gateway A or another repository).

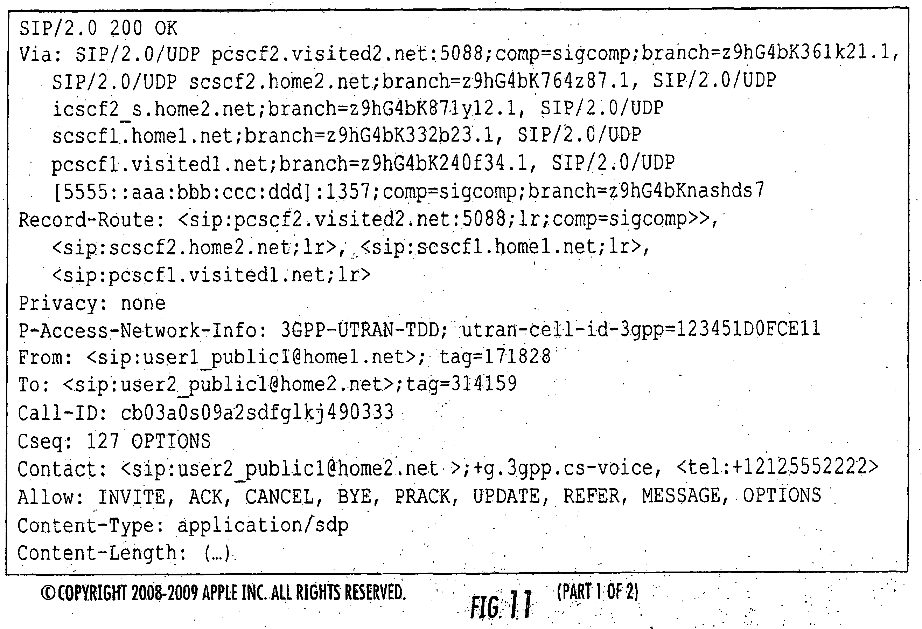

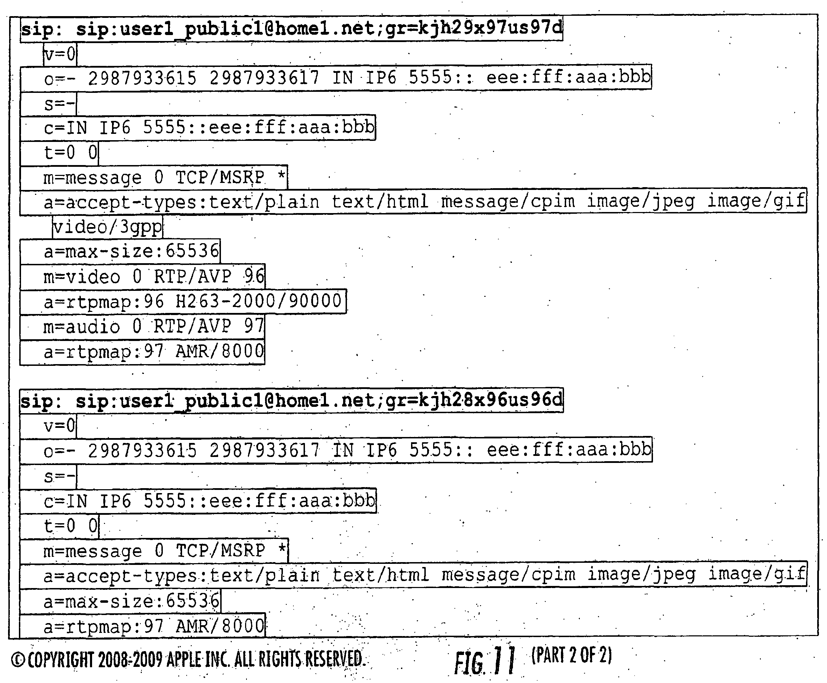

At step 912, home gateway A generates the SIP response message 200 OK, and adds the capabilities of UE A1 905 and UE A2 907 of user A in this SIP response message 200 OK. The capabilities of each UE are identified by a unique identifier. In one embodiment, the unique identifier includes the GRUU of the UE, although other identifiers for the UE can be utilized as desired. These identifiers may also be completely unique (e.g., MAC address), semi-unique (e.g., unique within a certain network, group, or organization), or non-unique (such as identifiers which only describe the type of device or class, and not the individual device itself). An embodiment in which the formatting of SIP response 200 OK message utilizes the GRUU as a unique identifier is shown in FIG. 11.

Starting at step 914, home gateway A sends this SIP response message 200 OK with all capabilities of user A (i.e., the capabilities of UE A1 905 and UE A2 907) via IMS core A 911, onto IMS core B 913 (step 916) and home gateway B 915 (step 918) and finally onto UE B1 917 at step 920. Upon receipt of the SIP response message 200 OK with the capabilities of all UEs of user A, UE B1 will store all these UE capabilities in internal storage at step 922. In an alternative embodiment, UE B1 will specify that home gateway B (or a proxy in communication with the network) shall store all these UE capabilities in its own internal storage.

### Business Methods -

In one embodiment, the intermediate entity devices (IEDs) 106, as described previously herein, can be implemented at a remote location such as the operating site of a network service provider. Furthermore, the intermediate entity device can act as a central repository for information related to the capabilities of UE devices of any number of users, or even for multiple users in multiple premises networks.

In an exemplary embodiment, the operator of the intermediate entity device 106 can offer a subscription-based service where subscribers can, for a nominal fee or as part of an incentive program, choose to store capabilities for various ones of the subscribers UE at the remote IED. Accordingly, other subscribers can, with proper authentication or permission access this capability information, for other users of the service. In this manner, subscribers of the subscription service can readily gain access to the capabilities of other users and take advantage of the capabilities of the many UE that exist on any number of network architectures.

In an alternative embodiment, the subscription-based service will operate free of charge to subscribers with revenue generated primarily through advertisements (targeted or otherwise) aimed at the subscribers of the service. Furthermore, information regarding the capabilities of various UE associated with a given user can be utilized to further target marketing materials or other advertising materials at designated users.

The stored capabilities information can also be utilized to tailor content delivery to the various UEs. For instance, where the capabilities information indicates that the UE is "thin" (i.e., has limited processing, display, storage, and/or communications bandwidth), the content to be delivered via the session (e.g., multimedia such as a video clip) can be (i) selected from a plurality of pre-encoded variants which are adapted for different types of UE platforms/capabilities, such as a particular audio or video codec (e.g., Real, H.264/AVC, MPEG, etc.); (ii) transcoded "on the fly" before or during delivery to an appropriate format for the target UE; or (iii) transrated to an appropriate bitrate (similar to the transcoding of item (ii) above).

Alternatively, the IED 106 can be operated at or local to the premises network(s) being served (see FIG. 1). This operation may be at the direction of the network operator or service provider (e.g., the IED may be a network-provided device which is controlled via signaling or other means directly from the service provider facilities). Alternatively, the IED may be controlled by the user/subscriber, and may even be purchased by them (e.g., via a retail outlet).

In one variant, the IED is configured to be "flashed" or otherwise reprogrammed remotely so as to accommodate the enhanced session-based protocol described herein. For instance, when the IED is so configured, the service provider may download an update to the IED to cause its program memory or mass storage device to replace files or other program structures so that the enhanced session capability of the present invention is enabled. Alternatively, the service provider may simply provide the subscriber with the device already programmed, or make a service call. Any number of mechanisms for providing the subscriber with an invention-enabled IED 106 will be recognized by those of ordinary skill given the present disclosure.

Along with control of the device by the network operator comes the ability to configure how and where capabilities or configuration information for the UE's in that network is stored and distributed. In one variant, this information is stored locally at the IED 106, and then periodically sent to or requested by the network operator server where it can be mirrored. The IED or network operator server can also optionally instigate a "refresh", e.g., a request for fresh capabilities data for all the UEs then on the network.

The capabilities (and network "presence") data can also be used by the network operator to determine demographics or other useful information relating to a given premises network. For instance, if a capabilities message (e.g., SIP OPTIONS message configured as previously described herein) is sent to a premises network by the operator indicating a request for all UE devices, information for all devices on the network will be returned. If this is done repeatedly over time, changes in network UE membership may be reflected (assuming that changes to the UE "population" on the network are updated relatively frequently within the IED 106 or gateway). Even static information (e.g., one snapshot in time) can be useful when considered across the entire subscriber population, such as to determine the type and distribution of UE devices on the various premises networks served by the network operator.

In related aspects, the ability to "firewall" external requests is generally desirable and adds to the tangible value of a good. The invention can be used to improve privacy in home networks and increase security. Unlike the uncontrolled prior art solutions for capabilities requests of a user (i.e., requesting the capabilities from exampleuser@somewhere.com and receiving one answer per device); the inventive scheme does not reveal the presence of the device in the home network. Prior art solutions imply the existence or non-existence of a user, as a present user will return a response. Thus, in one aspect of the present invention, the privacy of a user is shielded from direct inquiry. In one exemplary embodiment, the gateway always includes the capability of a user's mobile device regardless of whether it is present in the home network or not Thus, any call to that user via the gateway may be redirected to the mobile device. Accordingly, a snooping third party could not infer the existence or non-existence of a user with a direct inquiry.

In one embodiment, various aspects of the present invention may be further adapted for identifying content rather than capabilities. For example, a system could query the collection of content located on a home network. In one exemplary variant, an inventive gateway may receive a request for a type of content (e.g., UE-content: MP3, etc.), and return a response with the content of its registered devices (e.g., the MP3s of its constituents).

It will be recognized that while certain aspects of the invention are described in terms of a specific sequence of steps of a method, these descriptions are only illustrative of the broader methods of the invention, and may be modified as required by the particular application. Certain steps may be rendered unnecessary or optional under certain circumstances. Additionally, certain steps or functionality may be added to the disclosed embodiments, or the order of performance of two or more steps permuted. All such variations are considered to be encompassed within the invention disclosed and claimed herein.

While the above detailed description has shown, described; and pointed out novel features of the invention as applied to various embodiments, it will be understood that various omissions, substitutions, and changes in the form and details of the device or process illustrated may be made by those skilled in the art without departing from the invention. The foregoing description is of the best mode presently contemplated of carrying out the invention. This description is in no way meant to be limiting, but rather should be taken as illustrative of the general principles of the invention. The scope of the invention should be determined with reference to the claims.

## Claims

1. A method of operation within a user home network utilizing a session-based protocol, the method comprising:
at an intermediary entity of the user home network;
receiving a capabilities request message transmitted from a first entity, the first entity and the intermediary entity being distinct, the capabilities request message comprising a first modification of a request message associated with the session-based protocol and addressed to a second entity;
wherein the method is **characterised by**:
determining whether the capabilities request message includes an information element (IE) appended to the request message associated with the session-based protocol;
when the capabilities request message does not include the IE, forwarding the capabilities request message to the second entity;
when the capabilities request message includes the IE:
collecting capabilities of one of more devices associated with the second entity in accordance with one or more values included in the EE, and
sending to the first entity a capabilities response message comprising a second modification of a response message associated with the session-based protocol,
wherein the capabilities response message includes a set of capabilities of the one or more devices associated with the second entity and a unique identifier for each of the multiple devices to identify which capabilities of the set of capabilities belong to each device.

2. The method of claim 1, wherein the intermediary entity comprise a network gateway of the user home network, and the first and second entities each comprise devices associated with the user home network.

3. The method of claim 1, wherein the user home network comprises a Local Area Network (LAN), the first entity comprises a first device associated with the user home network, and the second entity comprises a second device associated with a second user home network.

4. The method of claim 1, wherein the the capabilities request message comprises a session initiation protocol (SIP) capabilities request message and the appended IE.

5. The method of claim 1, wherein the first network is interconnected to the second network via at least one IP multimedia subsystem (IMS) core network.

6. The method of claim 1, wherein the capabilities response message comprises a session initiation protocol (SIP) 200 OK response message.

7. The method of claim 1, wherein at least one value included in the IE indicates a logical or physical grouping of devices that each include a specified set of capabilities.

8. The method of claim 1, wherein the act of collecting comprises retrieving data from a repository stored at the intermediary entity, and the method further comprises:
detecting a newly discovered device on the user home network;
collecting capability information from the newly discovered device; and
storing the capability information for the newly discovered device in the repository.

9. The method of claim 1, wherein at least one value included in the IE specifies all devices associated with a specific user.

10. The method of claim 1, wherein at least one value included in the IE specifies all devices associated with a particular Internet Protocol (IP) address.

11. The method of claim 1, wherein at least one value included in the IE specifies all devices having a particular device type capability.

12. An intermediary entity apparatus of a network, the intermediary entity apparatus comprising:
means for receiving a capabilities request message transmitted from a second network, the capabilities request message comprising an information element (EE) appended to a request message of a session-based protocol, the IE indicating a request for capabilities of a set of devices in the network;
means for collecting the capabilities of the set of devices in the network associated with the intermediate entity apparatus in accordance with one or more values in the IE;
and
means for transmitting to the second network a capability response message that comprises a set of capabilities of the set of devices in the network,
wherein the capability response message comprises a unique identifier for each of the devices to identify which capabilities of the set of capabilities belong to each device.

13. The intermediary entity apparatus of claim 12, wherein at least one value included in the IE specifies all devices associated with a specific user.

14. The intermediary entity apparatus of claim 12, wherein at least one value included in the UE specifies all devices associated with a particular Internet Protocol (IP) address.

15. The intermediary entity apparatus of claim 12, wherein at least one value included in the UE specifies all devices having a particular device type capability.

## Patentansprüche

1. Betriebsverfahren innerhalb eines Benutzerheimnetzwerks, welches ein sitzungsbasiertes Protokoll verwendet, das Verfahren umfassend:
bei einer vermittelnden Einheit des Benutzerheimnetzwerks;
Empfangen einer Fähigkeitenanfragenachricht, die von einer ersten Einheit übertragen wird, wobei die erste Einheit und die vermittelnde Einheit voneinander unterschiedlich sind, wobei die Fähigkeitenanfragenachricht eine erste Änderung einer Anfragenachricht umfasst, die mit dem sitzungsbasierten Protokoll verknüpft ist und die an eine zweite Einheit gerichtet ist;
wobei das Verfahren **gekennzeichnet ist durch**:
Bestimmen, ob die Fähigkeitenanfragenachricht ein Informationselement (IE), beinhaltet, das an die Anfragenachricht angehängt ist, das mit dem sitzungsbasierten Protokoll verknüpft ist;
wenn die Fähigkeitenanfragenachricht das IE nicht beinhaltet, Weiterleiten der Fähigkeitenanfragenachricht an die zweite Einheit;
wenn die Fähigkeitenanfragenachricht das IE beinhaltet:
Sammeln von Fähigkeiten von einer oder mehreren Vorrichtungen, die mit der zweiten Einheit verknüpft sind in Übereinstimmung mit einem oder mehreren Werten, die in dem IE beinhaltet sind, und
Senden einer Fähigkeitenanfragenachricht an die erste Einheit, die eine zweite Änderung einer Anfragenachricht umfasst, die mit dem sitzungsbasierten Protokoll verknüpft ist,
wobei die Fähigkeitenanfragenachricht einen Satz von Fähigkeiten der einen oder der mehreren Vorrichtungen, die mit der zweiten Einheit verknüpft sind, und einen eindeutigen Identifikator für jede der mehreren Vorrichtungen beinhaltet, um zu identifizieren, welche Fähigkeiten des Satzes von Fähigkeiten zu jeder Vorrichtung gehören.

2. Verfahren nach Anspruch 1, wobei die vermittelnde Einheit ein Netzwerk-Gateway des Benutzerheimnetzwerks umfasst und wobei die ersten und zweiten Einheiten jeweils Vorrichtungen umfassen, die mit dem Benutzerheimnetzwerk verknüpft sind.

3. Verfahren nach Anspruch 1, wobei das Benutzerheimnetzwerk ein lokales Netzwerk (Local Area Network, LAN) umfasst, wobei die erste Einheit eine erste Vorrichtung umfasst, die mit dem Benutzerheimnetzwerk verknüpft ist, und wobei die zweite Einheit eine zweite Vorrichtung umfasst, die mit einem zweiten Benutzerheimnetzwerk verknüpft ist.

4. Verfahren nach Anspruch 1, wobei die Fähigkeitenanfragenachricht eine Sitzungseinleitungsprotokoll-(Session Initiation Protocol, SIP)-Fähigkeitenanfragenachricht und das angehängte IE umfasst.

5. Verfahren nach Anspruch 1, wobei das erste Netzwerk mit dem zweiten Netzwerk über zumindest ein IP-Multimediauntersystem-(IP Multimedia Subsystem, IMS)-Kernnetzwerk zwischenverbunden ist.

6. Verfahren nach Anspruch 1, wobei die Fähigkeitenanfragenachricht eine Sitzungseinleitungsprotokoll-(Session Intitiation Protocol, SIP)-200 OK-Antwortnachricht umfasst.

7. Verfahren nach Anspruch 1, wobei mindestens ein Wert, der in dem IE beinhaltet ist, eine logische oder physische Gruppierung von Vorrichtungen angibt, die jeweils einen spezifizierten Satz von Fähigkeiten beinhalten.

8. Verfahren nach Anspruch 1, wobei die Handlung des Sammelns ein Abrufen von Daten aus einem Lager umfasst, das bei der vermittelnden Einheit gespeichert ist, und wobei das Verfahren weiter umfasst:
Erkennen einer neu entdeckten Vorrichtung des Benutzerheimnetzwerks;
Sammeln von Fähigkeitsinformationen der neu entdeckten Vorrichtung; und
Speichern der Fähigkeitsinformationen der neu entdeckten Vorrichtung in dem Lager.

9. Verfahren nach Anspruch 1, wobei mindestens ein Wert, der in dem IE beinhaltet ist, alle Vorrichtungen, die mit einem spezifischen Benutzer verknüpft sind, spezifiziert.

10. Verfahren nach Anspruch 1, wobei mindestens ein Wert, der in dem IE beinhaltet ist, alle Vorrichtungen spezifiziert, die mit einer bestimmten Internetprotokoll-(IP)-Adresse verknüpft sind.

11. Verfahren nach Anspruch 1, wobei mindestens ein Wert, der in dem IE beinhaltet ist, alle Vorrichtungen spezifiziert, die eine bestimmte Vorrichtungstypfähigkeit aufweisen.

12. Vermittelnde Einheitenvorrichtung eines Netzwerks, wobei die vermittelnde Einheitenvorrichtung umfasst:
Mittel zum Empfangen einer Fähigkeitenanfragenachricht, die von einem zweiten Netzwerk übertragen wird, wobei die Fähigkeitenanfragenachricht ein Informationselement (IE) beinhaltet, das an eine Anfragenachricht eines sitzungsbasierten Protokolls angehängt ist, wobei das IE eine Anfrage nach Fähigkeiten eines Satzes von Vorrichtungen in dem Netzwerk angibt;
Mittel zum Sammeln der Fähigkeiten des Satzes von Vorrichtungen in dem Netzwerk, das mit der vermittelnden Einheitenvorrichtung verknüpft ist, in Übereinstimmung mit einem oder mehreren Werten in dem IE;
und
Mittel zum Übertragen einer Fähigkeitenantwortnachricht an das zweite Netzwerk, die einen Satz von Fähigkeiten des Satzes von Vorrichtungen in dem Netzwerk umfasst,
wobei die Fähigkeitenantwortnachricht einen eindeutigen Identifikator für jede der Vorrichtungen umfasst, um zu identifizieren, welche Fähigkeiten des Satzes von Fähigkeiten zu jeder Vorrichtung gehören.

13. Vermittelnde Einheitenvorrichtung nach Anspruch 12, wobei mindestens ein Wert, der in dem IE beinhaltet ist, alle Vorrichtungen, die mit einem spezifischen Benutzer verknüpft sind, spezifiziert.

14. Vermittelnde Einheitenvorrichtung nach Anspruch 12, wobei mindestens ein Wert, der in dem IE beinhaltet ist, alle Vorrichtungen spezifiziert, die mit einer bestimmten Internetprotokoll-(IP)-Adresse verknüpft sind.

15. Vermittelnde Einheitenvorrichtung nach Anspruch 12, wobei mindestens ein Wert, der in dem IE beinhaltet ist, alle Vorrichtungen spezifiziert, die eine bestimmte Vorrichtungstypfähigkeit aufweisen.

## Revendications

1. Un procédé de mise en oeuvre au sein d'un réseau domestique utilisateur utilisant un protocole basé sur des sessions, le procédé comprenant :
au niveau d'une entité intermédiaire du réseau domestique utilisateur :
la réception d'un message de requête d'aptitudes émis depuis une première entité, la première entité et
l'entité intermédiaire étant distinctes, le message de requête d'aptitudes comprenant une première modification d'un message de requête associé au protocole basé sur des sessions et adressé à une seconde entité,
dans lequel le procédé est **caractérisé par** :
la détermination si le message de requête d'aptitudes inclut ou non un élément d'information (IE) annexé au message de requête associé au protocole basé sur des sessions ;
lorsque le message de requête d'aptitudes n'inclut pas l'IE,
la transmission du message de requête d'aptitudes à la seconde entité ;
lorsque le message de requête d'aptitudes inclut l'IE :
le recueil des aptitudes d'un ou plusieurs dispositifs associés à la seconde entité conformément à une ou plusieurs valeurs incluses dans l'IE, et
l'envoi à la première entité d'un message de réponse d'aptitudes comprenant une seconde modification d'un message de réponse associé au protocole basé sur des sessions,
dans lequel le message de réponse d'aptitudes comprend un ensemble d'aptitudes des un ou plusieurs dispositifs associés à la seconde entité et un identifiant univoque pour chacun des multiples dispositifs pour identifier celles des aptitudes de l'ensemble d'aptitudes qui appartiennent à chaque dispositif.

2. Le procédé de la revendication 1, dans lequel l'entité intermédiaire comprend une passerelle réseau du réseau domestique utilisateur, et les première et seconde entités comprennent chacune des dispositifs associés au réseau domestique utilisateur.

3. Le procédé de la revendication 1, dans lequel le réseau domestique utilisateur comprend un réseau d'étendue locale (LAN), la première entité comprend un premier dispositif associé au réseau domestique utilisateur, et la seconde entité comprend un second dispositif associé à un second réseau domestique utilisateur.

4. Le procédé de la revendication 1, dans lequel le message de requête d'aptitudes comprend un message de requête d'aptitudes de protocole d'initiation de session (SIP) et l'IE annexé.

5. Le procédé de la revendication 1, dans lequel le premier réseau est interconnecté au second réseau via au moins un coeur de réseau IP de sous-système multimedia (IMS).

6. Le procédé de la revendication 1, dans lequel le message de réponse d'aptitudes comprend un message de réponse 200 OK de protocole d'initiation de session (SIP).

7. Le procédé de la revendication 1, dans lequel au moins une valeur incluse dans l'IE indique un regroupement logique ou physique de dispositifs qui comprennent chacun un ensemble spécifié d'aptitudes.

8. Le procédé de la revendication 1, dans lequel l'action de recueil comprend la récupération de données depuis un référentiel stocké au niveau de l'entité intermédiaire, et le procédé comprend en outre :
la détection d'un dispositif nouvellement découvert sur le réseau domestique utilisateur ;
le recueil d'une information d'aptitudes en provenance du dispositif nouvellement découvert ; et
le stockage de l'information d'aptitudes pour le dispositif nouvellement découvert dans le référentiel.

9. Le procédé de la revendication 1, dans lequel au moins une valeur incluse dans l'IE spécifie tous les dispositifs associés à un utilisateur spécifique.

10. Le procédé de la revendication 1, dans lequel au moins une valeur incluse dans l'IE spécifie tous les dispositifs associés à une adresse en protocole Internet (IP) particulière.

11. Le procédé de la revendication 1, dans lequel au moins une valeur incluse dans l'IE spécifie tous les dispositifs possédant une aptitude particulière de type de dispositif.

12. Un équipement d'entité intermédiaire d'un réseau, l'équipement d'entité intermédiaire comprenant :
des moyens de réception d'un message de requête d'aptitudes émis depuis un second réseau, le message de requête d'aptitudes comprenant un élément d'information (IE) annexé à un message de requête d'un protocole basé sur des sessions, l'IE indiquant une requête pour des aptitudes d'un ensemble de dispositifs du réseau ;
des moyens de recueil des aptitudes de l'ensemble de dispositifs du réseau associées à l'équipement d'entité intermédiaire conformément à une ou plusieurs valeurs dans l'IE ; et
des moyens d'émission vers le second réseau d'un message de réponse d'aptitudes qui comprend un ensemble d'aptitudes de l'ensemble de dispositifs du réseau,
dans lequel le message de réponse d'aptitudes comprend un identifiant univoque pour chacun des dispositifs pour identifier celles des aptitudes de l'ensemble d'aptitudes qui appartiennent à chaque dispositif.

13. L'équipement d'entité intermédiaire de la revendication 12, dans lequel au moins une valeur incluse dans l'IE spécifie tous les dispositifs associés à un utilisateur spécifique.

14. L'équipement d'entité intermédiaire de la revendication 12, dans lequel au moins une valeur incluse dans l'IE spécifie tous les dispositifs associés à une adresse en protocole Internet (IP) particulière.

15. L'équipement d'entité intermédiaire de la revendication 12, dans lequel au moins une valeur incluse dans l'IE spécifie tous les dispositifs possédant une aptitude particulière de type de dispositif.
